(19) Europäisches Patentamt
European Patent Office
Office européen des brevets

(11) **EP 0 743 538 A2**

## (12) DEMANDE DE BREVET EUROPEEN

(43) Date de publication:
**20.11.1996 Bulletin 1996/47**

(51) Int Cl.[6]: **G01T 1/29**, G01T 7/00

(21) Numéro de dépôt: **96401051.6**

(22) Date de dépôt: **14.05.1996**

(84) Etats contractants désignés:
**BE DE ES FR GB SE**

(30) Priorité: **19.05.1995 FR 9505979**

(71) Demandeur: **S.T.M.I. Société des Techniques en Milieu Ionisant**
**F-91196 Gif-sur-Yvette (FR)**

(72) Inventeurs:
• **Fouquet, Christian**
  **78610 Le Perray en Yvelines (FR)**

• **Porcher, Jean-Baptiste**
  **91190 Gif sur Yvette (FR)**
• **Headrich, Hugues**
  **91190 Gif sur Yvette (FR)**

(74) Mandataire: **Dubois-Chabert, Guy et al**
**c/o BREVATOME**
**25, rue de Ponthieu**
**75008 Paris (FR)**

(54) **Dispositif de localisation à distance de sources radioactives et de mesure spectrométrique dans une zone d'observation**

(57)     Dispositif de localisation à distance de sources radioactives et de mesure spectrométrique dans une zone d'observation.

Ce dispositif comportp une caméra optique (18) pour fournir une image de la zone d'observation (14), et des moyens de détection du rayonnement radioactifs. Selon l'invention, les moyens de détection comportent un détecteur (26) de rayonnement gamma à résolution de position, et un système de traitement (32) de signaux électriques de la caméra (18) et du détecteur (26) pour former une image de localisation des sources radioactives (16). Application à la cartographie de zones irradiantes.

FIG. 1

## Description

Domaine technique de l'invention

La présente invention concerne un dispositif de localisation à distance de sources radioactives et de mesure spectrométrique dans une zone d'observation. Un tel dispositif permet de repérer des sources de rayonnement volontairement ou accidentellement présentes dans la zone d'observation, et de dresser une carte ou une image de la zone d'observation sur laquelle apparaissent ces sources.

Etat de la technique antérieure

On connaît par le document (1) FR-A-2 706 626 un dispositif de localisation comportant une caméra apte à fournir des signaux électriques correspondant à une image d'une zone d'observation, et une chambre à sténopé équipée de moyens de détection du rayonnement émis par les sources radioactives. La chambre à sténopé du dispositif décrit dans le document (1) comporte un écran radiophotoluminescent qui est sensible au rayonnement émis par les sources et disposé en regard du sténopé derrière un collimateur. Une image latente des sources radioactives se forme sur cet écran qui est ensuite extrait de la chambre à sténopé et disposé sur un appareil de lecture.

Un système de visualisation recevant des signaux électriques de la caméra et de l'appareil de lecture superpose une image dite "visible" de la zone de mesure et une image dite image "gamma".

Le dispositif de localisation du document (1) permet un gain de temps dans la réalisation d'images de localisation des sources par rapport à des dispositifs utilisant à la place de l'écran radiophotoluminescent un film classique sensible aux rayonnements gamma. Il permet notamment d'éviter la perte du temps nécessaire aux développement de ce film. Toutefois, le dispositif ne permet pas d'éviter une formation différée de l'image.

En effet, avant de former l'image de localisation, il faut extraire l'écran radiophotoluminescent de la chambre à sténopé et le lire sur l'appareil prévu à cet effet.

Par ailleurs, en raison d'une sensibilité, certes bonne, mais toutefois limitée, de l'écran radiophotoluminescent, il est nécessaire d'exposer ce dernier pendant un temps suffisant pour que l'image latente puisse s'y former.

La présente invention vise à remédier à ces limitations et a donc pour objet un dispositif de localisation de sources permettant de fournir une image non différée d'une zone d'observation.

Un but de la présente invention est aussi de proposer un dispositif très sensible à l'information énergétique provenant des sources, en particulier leur rayonnement gamma.

Un autre but de la présente invention est de proposer un dispositif de localisation de sources qui soit également capable d'effectuer, simultanément à la formation des images de localisation, des mesures spectrométriques de ces sources.

Un autre but encore de l'invention est de proposer un dispositif de localisation capable de faire des mesures spectrométriques rapides en focalisant ces mesures sur des parties de la zone d'observation contenant les sources.

Exposé de l'invention

Pour atteindre ces buts, l'invention concerne plus précisément un dispositif de localisation à distance de sources de rayonnement radioactives dans une zone d'observation, comportant au moins une caméra optique apte à fournir des signaux électriques correspondant à une image de la zone d'observation, et au moins une chambre à sténopé équipée de moyens de détection du rayonnement émis par les sources radioactives de la zone d'observation. Selon l'invention, les moyens de détection comportent un détecteur de rayonnement gamma à résolution de position apte à fournir des signaux électriques de détection fonction d'une distribution du rayonnement dans la zone d'observation, et un système de traitement des signaux électriques de la caméra et du détecteur pour former une image de localisation des sources radioactives.

On entend par caméra optique une caméra sensible dans un spectre de longueurs d'ondes correspondant sensiblement au spectre visible de la lumière. Par ailleurs, l'image de localisation est comprise comme une superposition d'une image dans le spectre visible et d'une image représentative du rayonnement gamma.

Le détecteur solide, qui prend la place de l'écran radiophotoluminescent de l'art antérieur dans la chambre à sténopé, n'est pas extrait de cette chambre pour former une image mais fournit directement des signaux électriques qui rendent compte de la distribution dans la zone de mesure du rayonnement émis par les sources et donc de la distribution de ces sources.

Le détecteur solide utilisé dans le dispositif de l'invention peut comporter selon un aspect avantageux de l'invention un cristal de détection configuré en une matrice d'éléments de détection, appelés pixels. Une image de la zone de mesure est formée sur le cristal de détection au moyen d'un collimateur.

Selon un autre aspect particulièrement avantageux de l'invention, le dispositif peut comporter des moyens de sélection de signaux électriques du détecteur solide correspondant à au moins une partie de la zone d'observation.

Selon un premier mode de mise en oeuvre de l'invention, les sorties de signaux du détecteur comportent des lignes de pixels reliées électriquement à des chaînes d'éléments discrets de résistances. Ces chaînes sont disposées de telle sorte qu'elles recueillent les signaux selon une formation en lignes et colonnes, correspondant à deux axes de coordonnées spatiales (x et y). Les extrémités de ces chaînes sont reliées à quatre amplificateurs de charges qui fournissent ensuite des impulsions à un codeur de position d'une unité de traitement.

La sélection des signaux peut être effectuée, par exemple, par un discriminateur de position piloté par une unité logique.

Comme le détecteur solide est du type à résolution de position il est en effet possible de faire une sélection sur les signaux en fonction de leur position de détection sur le détecteur, c'est-à-dire en fonction de la partie de la zone d'observation à laquelle ils correspondent.

Selon un mode de réalisation particulier des moyens de sélection, ceux-ci peuvent aussi agir directement sur chaque élément de détection du détecteur solide.

En effet, selon un aspect de l'invention, chaque élément de détection peut comporter un transistor de transmission des signaux de détection de l'élément de détection, et les moyens de sélection peuvent comporter un circuit de commande des transistors de transmission pour sélectivement inhiber ou valider la transmission des signaux de détection de chaque élément de détection en fonction de ladite partie de la zone d'observation.

Selon un autre aspect particulier de l'invention, le système de traitement des signaux peut comporter un sommateur pour délivrer, en réponse aux signaux de détection du détecteur, des signaux analogiques avec une amplitude proportionnelle à une énergie absorbée par le détecteur solide, ainsi qu'une unité de spectrométrie gamma pour effectuer une analyse spectrale des énergies des rayonnements émis par les sources. L'unité de spectrométrie gamma comporte, par exemple, un discriminateur en énergie.

Grâce à cet aspect de l'invention, il est possible de connaître non seulement la localisation des sources mais aussi leur nature et leur intensité.

Le système de traitement peut aussi comporter un système de commande des moyens de sélection de signaux électriques pour sélectionner dans la zone de mesure une ou plusieurs zones dites d'acquisition spectrométriques. Le système de commande comporte, par exemple, un micro-ordinateur.

En choisissant de telles zones, on peut réaliser une focalisation de l'acquisition spectrale sur les sources particulières, par exemple les plus intenses, et ainsi accélérer les mesures de spectrométrie et augmenter leur résolution.

Selon un autre aspect particulier de l'invention, le dispositif de détection peut être monté sur rails pour une observation de la zone d'observation sous des angles différents. Le dispositif peut aussi être équipé de deux caméras optiques et de deux chambres à sténopé du type décrit ci-dessus, angulairement décalées, pour fournir des "vues" de la zone d'observation sous des angles différents. Il est ainsi possible de créer une image de localisation offrant à un utilisateur du dispositif une sensation de relief.

Une telle vision stéréoscopique permet d'avoir trois coordonnées de position des sources de rayonnement gamma, ce qui constitue un avantage appréciable pour des zones d'observation contenant de nombreux matériaux quasi-transparents aux rayonnements gamma. La stéréoscopie de l'image "visible" constitue également un avantage dans la mesure ou elle offre à l'utilisateur tout le confort nécessaire à une exploitation efficace des images de localisation.

La caméra optique utilisée dans le dispositif peut en outre être équipée d'un repérage gradué ou d'un télémètre à laser pour mesurer les dimensions ou l'éloignement des objets observés, et en particulier des sources, dans la zone d'observation.

D'autres caractéristiques et avantages de l'invention ressortiront de la description qui suit donnée à titre purement illustratif et non limitatif en référence aux dessins annexés.

Brève description des figures

- la figure 1 est une vue schématique d'un dispositif conforme à la présente invention selon un premier mode de mise en oeuvre,
- la figure 2 est une vue détaillée du détecteur utilisé dans le mode de mise en oeuvre de la figure 1,
- la figure 3 est un graphique donnant un exemple de tensions délivrées par le détecteur à un système de traitement du dispositif de l'invention,
- la figure 4 est une vue schématique d'un dispositif conforme à la présente invention montrant un détail d'un détecteur solide de rayonnements, selon un autre mode de mise en oeuvre.

Exposé détaillé de modes de réalisation

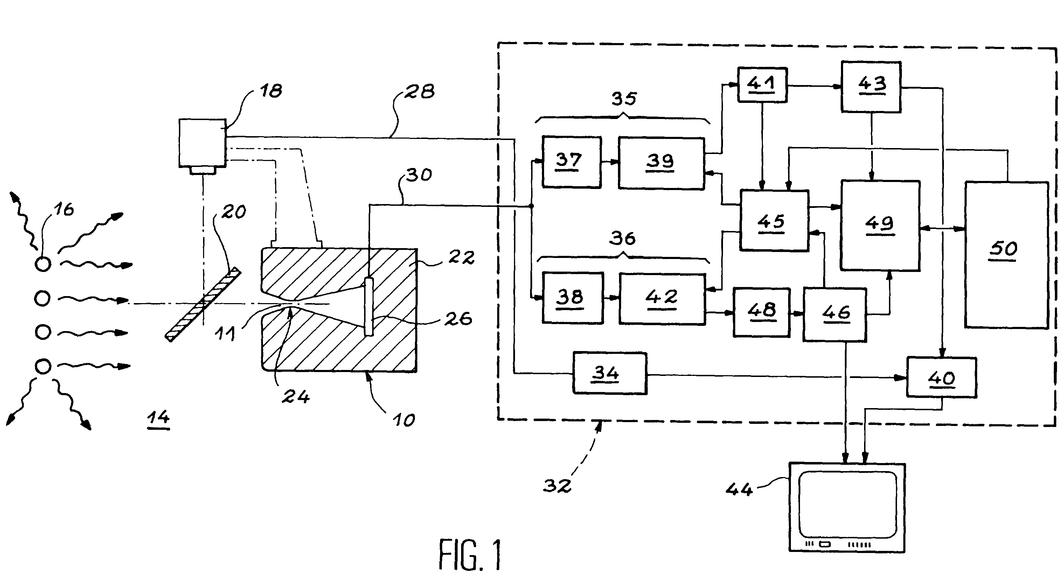

Conformément à l'invention, le dispositif représenté à la figure 1 comporte une chambre à sténopé 10 dont le sténopé 11 est dirigé vers une zone de mesure 14 dans laquelle se trouvent des sources de rayonnement gamma représentées très schématiquement avec la référence 16. Une caméra optique 18, c'est-à-dire sensible à la lumière visible, solidaire de la chambre 10, reçoit la lumière visible de la zone 14 par un système de visée comportant un miroir 20.

La chambre à sténopé 10 comporte une paroi épaisse 22 qui constitue un blindage vis-à-vis des rayonnements gamma (γ). La paroi 22 est réalisée par exemple en un alliage approprié à base de tungstène, tel que l'alliage connu sous le nom "Denal". Un collimateur 24 de la chambre 12 permet de former une "image" des rayonnements γ sur un détecteur à résolution de position 26, par exemple du type GeHP (Germanium Haute Pureté) ou AsGa (Arséniure de Gallium), disposé dans la chambre 12. On entend par "image" des rayonnements γ une distribution d'intensités sur le détecteur 26 obtenue par le collimateur 24 qui est du type à double cône, par exemple.

Des liaisons électriques 28, 30 relient respectivement la caméra 18 et le détecteur 26 à un système de traitement 32 auquel elles fournissent des signaux électriques provenant du détecteur et de la caméra.

Le système de traitement comporte une unité d'acquisition 34 des signaux électriques de la caméra 18 pour former, sous forme de signaux électriques, une première image d'observation de la zone d'observation 14. Cette première image qui est une image de lumière visible de cette zone est appelée "image visible".

Les signaux de détection du détecteur 26 sont dirigés à la fois vers une ligne dite de localisation 35 et une ligne de spectrométrie 36 du système de traitement 32.

La ligne de localisation 35 comporte dans l'ordre un codeur de position 37 et un discriminateur de position 39 qui forment un moyen de sélection des signaux du détecteur 26. Le codeur de position dont le fonctionnement est expliqué plus en détail ci-dessous délivre au discriminateur de position des impulsions de tension dont l'amplitude est fonction de la position de mesure du rayonnement sur le détecteur 26.

Le discriminateur de position 39 comporte des circuits de sélection des impulsions qui lui sont fournis par le codeur de position 37. La sélection est effectuée en inversant sélectivement les polarisations des éléments électroniques en fonction de l'amplitude des signaux qui correspond à la position des rayonnements détectés.

Les signaux sélectionnés par le discriminateur de position 39 sont dirigés vers un convertisseur analogique numérique 41. Les signaux numérisés du convertisseur 41 sont fournis à une unité de calcul 43 capable de former une image numérique dite image gamma et à effectuer des traitements spéciaux tels que le calcul des courbes isodoses. Les signaux numérisés sont également dirigés vers une unité de contrôle logique 45 décrite ci-dessous.

La ligne de spectrométrie 36 correspond à une chaîne de spectrométrie gamma d'un type connu. Après des moyens 38 de sommation, de filtre et d'amplification qui reçoivent les signaux du détecteur 26, la ligne 36 comporte un discriminateur en énergie.

Les moyens 38 délivrent, en réponse aux signaux du détecteur, des impulsions dont l'amplitude est proportionnelle à l'énergie des signaux. Le discriminateur en énergie 42 sélectionne les impulsions en fonction de leur amplitude.

Les signaux sont ensuite numérisés dans un convertisseur analogique-numérique 46 qui est, tout comme le convertisseur 41, relié à l'unité de contrôle logique 45.

Pour une meilleure gestion des signaux et pour éviter un éventuel chevauchement des impulsions fournies par les lignes de localisation 35 et de spectrométrie 36, une ligne à retard 48 peut être montée en aval du convertisseur 46. La ligne à retard 48 permet en particulier à des impulsions provenant de l'unité de calcul 43 et du convertisseur 46 d'être simultanément dirigées vers une mémoire 49.

La mémoire 49 permet de stocker les images gamma issus de la ligne de localisation et des spectres issus de la ligne de spectrométrie.

L'unité de contrôle logique 45, évoquée ci-dessus contient des circuits de commande des discriminateurs en position 39 et en énergie 42. Les circuits de commande peuvent être pilotés selon un logiciel approprié. On peut à ce sujet noter qu'il existe une relation entre les lignes de détection et de spectrométrie car les signaux du détecteur 26 sont à la fois fonction de la position qu'ils ont sur la surface de détection du détecteur et fonction de l'énergie des photons gamma à l'origine des interactions dans le cristal du détecteur.

La sélection d'une énergie particulière correspond ainsi à la sélection d'une position. Il est ainsi possible d'effectuer une discrimination en énergie sur les radioéléments détectés en fonction de l'endroit où ils ont été détectés, ce qui revient à localiser les radioéléments en fonction de leur nature.

Ces opérations sont effectuées par l'unité logique 45 sous le contrôle de l'utilisateur, par l'intermédiaire d'une unité de contrôle opérationnel 50, qui est, par exemple, un micro-ordinateur de type connu.

L'unité 50 reliée à la mémoire 49 et à l'unité logique 45 permet à l'utilisateur de rappeler de la mémoire, par exemple, le spectre correspondant à une image donnée.

Enfin, le système de traitement comporte une unité 40 qui superpose les images visibles fournies par l'unité d'acquisition 34 et par l'unité de calcul 43. Un dispositif de visualisation 44 permet de visualiser au choix un spectre fourni par le convertisseur 46, l'image gamma fournie par l'unité de calcul 43 ou bien une image de localisation fournie par l'unité 40, l'image de localisation étant la superposition de l'image visible et de l'image gamma.

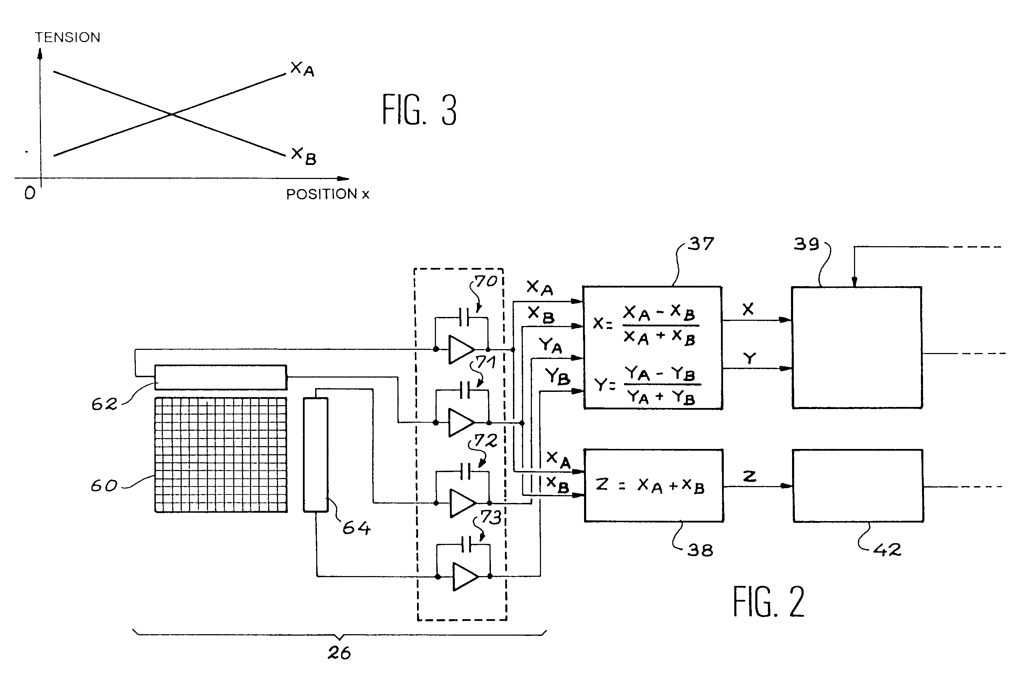

La figure 2 montre plus en détail un exemple de réalisation du détecteur 26 et du fonctionnement du codeur de position 37 et des moyens 38 de sommation.

Le détecteur 26 comporte, comme le montre la figure 2 une mosaïque d'éléments de détection 60 individuels connectés respectivement à deux réseaux résistifs 62 et 64 qui correspondent respectivement des axes de mesure de position d'abscisse (x) et d'ordonnée (y). Les charges créées dans les éléments de détection 60 sous l'effet des rayonnements, sont recueillies dans les réseaux 62 et 64 puis dirigées vers des préamplificateurs de charge 70, 71, 72, 73.

Les bornes du réseau 62 sont respectivement reliées aux préamplificateurs de charge 70 et 71 et les bornes du réseau de résistances 64 sont reliées aux préamplificateurs de charge 72 et 73.

Les préamplificateurs délivrent au codeur de position 37 et aux moyens de sommation 38 des tensions désignées par $X_A$, $X_B$, $Y_A$ et $Y_B$ et qui correspondent respectivement à des positions de rayonnements détectés par le détecteur 26.

Pour une meilleure compréhension, la figure 3 indique à titre d'exemple, en fonction de la position en abscisse x sur le détecteur, les tensions $X_A$ et $X_B$ délivrées par les préamplificateurs de charge. Les tensions reportées en ordonnée sur la figure 3 sont exprimées en échelle arbitraire. On peut noter que les tensions $X_A$ et $X_B$ évoluent en sens inverse en fonction de la position x.

Le codeur de position 37 délivre au discriminateur de position 39 des impulsions de tensions X et Y correspondant à une position sur le cristal du détecteur et définies selon les relations suivantes :

$$X = \frac{X_A - X_B}{X_A + X_B}$$

et

$$Y = \frac{Y_A - Y_B}{Y_A + Y_B}$$

Les moyens de sommation 38 délivrent au discriminateur 42 de la ligne de spectrométrie 36 des impulsions de tension Z définies par la relation suivante :

$$Z = X_A + X_B.$$

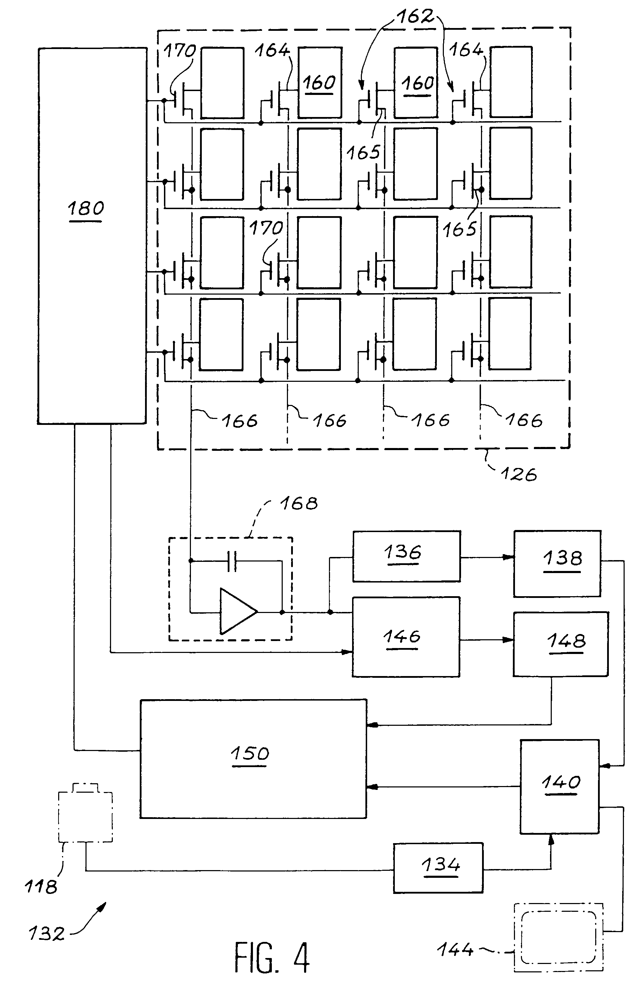

La figure 4 est une variante de réalisation du dispositif de l'invention. On retrouve sur cette figure un certain nombre d'éléments existant déjà sur le dispositif de la figure 1. On identifie ainsi sur la figure 4 un système de traitement 132 avec une unité d'acquisition 134 des signaux d'une caméra 118, un codeur de position 136, une unité de numérisation 138 de type convertisseur analogique numérique, une unité de superposition 140, un dispositif de visualisation 144, une chaîne de spectrométrie gamma 148 avec un sommateur 146, et une unité de commande qui est un micro-ordinateur 150. Pour tous ces éléments on peut donc se reporter à la description qui précède.

La figure 4 ne montre pas de chambre à sténopé mais illustre de façon plus détaillée un détecteur à résolution de position 126. Ce détecteur, de même que la caméra 118, sont toutefois utilisés dans un dispositif et un arrangement semblables à ceux illustrés à la figure 1.

Le détecteur 126 de la figure 4 à cristal solide est de même nature en de même type que le détecteur 26 décrit ci-dessus, c'est-à-dire, par exemple, un détecteur au germanium de haute pureté ; et comporte une matrice d'éléments de détection 160.

A chaque élément de détection 160 est associé un transistor à effet de champ 162 de transmission des signaux de cet élément. Les drains 164 des transistors 162 sont respectivement reliés aux éléments 160 et les sources 165 des transistors 164 sont respectivement reliées à des lignes de signaux 166 pour acheminer les signaux de chaque élément de détection 160 vers le système de traitement 132 via des préamplificateurs 168.

A chaque ligne d'éléments de détection 160 de la matrice est associée une ligne de signaux 166 et chaque ligne de signaux est reliée au codeur 136 et au sommateur 146, respectivement par un préamplificateur 168. Toutefois, pour des raisons de simplification, un seul préamplificateur 168 est représenté sur la figure 4.

Dans la réalisation conforme à la figure 4, les moyens de sélection des signaux comportent un circuit de portes logiques 180 piloté par le micro-ordinateur 150, et relié respectivement aux grilles 170 des transistors 160 pour inhiber ou valider la transmission des signaux de détection vers la ligne 166.

En rendant conducteur ou en bloquant les transistors 162 correspondant à un ou plusieurs éléments de détection, en appliquant sur leur grille une tension appropriée, il est possible de sélectionner des régions du détecteur qui correspondent à des parties de la zone d'observation. Dans le cas de la figure 4 les grilles des transistors d'une même ligne sont reliés entre elles. Il est toutefois possible d'envisager une commande individuelle de chaque transistor.

Finalement, grâce à l'invention, il est possible d'effectuer rapidement et avec une grande précision des cartographies des zones irradiantes en délivrant des informations concernant la localisation des sources, leur intensité et leur énergie d'émission. Par extension, la mesure de flux associée à la connaissance de l'efficacité de détection, permet la mesure directe des débits d'exposition et par une fonction de transfert appropriée, le calcul de l'activité des sources visionnées. Le dispositif peut être installé par exemple sur un support mobile afin d'accéder à une zone d'observation irradiante.

**Revendications**

1. Dispositif de localisation à distance de sources de rayonnement radioactives dans une zone d'observation (14), comportant au moins une caméra optique (18, 118) apte à fournir des signaux électriques correspondant à une image de la zone d'observation (14), et au moins une chambre à sténopé (10) équipée de moyens de détection du rayonnement émis par les sources radioactives (16) de la zone d'observation (14), caractérisé en ce que les moyens de détection comportent un détecteur (26, 126) de rayonnement gamma à résolution de position, apte à fournir des signaux électriques de détection fonction d'une distribution du rayonnement dans la zone d'observation, et un système de traitement (32, 132) des signaux électriques de la caméra (18, 118) et du détecteur (26, 126) pour former une image de localisation des sources radioactives (16).

2. Dispositif selon la revendication 1, caractérisé en ce qu'il comporte un moyen de sélection (39, 180) de signaux électriques du détecteur solide (26, 126) correspondant à au moins une partie de la zone d'observation.

3. Dispositif selon la revendication 1 ou 2, caractérisé en ce que le détecteur solide comporte un cristal de détection avec une matrice d'éléments de détection (60, 160), dits pixels, disposés dans la chambre à sténopé (10) derrière un collimateur (24).

4. Dispositif selon la revendication 3, caractérisé en ce que chaque élément de détection comporte un transistor (162) de transmission des signaux de détection de l'élément de détection, et les moyens de sélection comportent un circuit de commande (180) des transistors de transmission pour sélectivement inhiber ou valider la transmission des signaux de détection de chaque élément de détection en fonction de ladite partie de la zone d'observation (14)

5. Dispositif selon la revendication 1 ou 2, caractérisé en ce qu'il comporte un codeur de position (37) capable de délivrer, en réponse aux signaux du détecteur (26), des impulsions de tension dont les amplitudes correspondent à des positions sur le détecteur, et les moyens de sélection comportent un discriminateur de position (39) capable de sélectionner les impulsions en fonction de leur amplitude.

6. Dispositif selon la revendication 1 ou 2, caractérisé en ce que le système de traitement comporte un codeur de position (136) pour délivrer, en réponse aux signaux de détection du détecteur solide (126), des signaux analogiques de coordonnées fonction d'une distribution du rayonnement dans la zone d'observation, une unité de numérisation (138) des signaux analogiques de coordonnées en de formation d'une première image des sources radioactives (16) de la zone d'observation (14) dite "image gamma", une unité (134) d'acquisition des signaux électriques de la caméra (118) pour former une deuxième image de la zone d'observation dite "image visible" et une unité de superposition (140) de la première et de la deuxième image pour former l'image de localisation des sources radioactives (16).

7. Dispositif selon la revendication 1 ou 2, caractérisé en ce que le système de traitement des signaux comporte un sommateur (146) pour délivrer, en réponse aux signaux de détection du détecteur, des signaux analogiques avec une amplitude proportionnelle à une énergie absorbée par le détecteur solide, et une unité de spectrométrie gamma (148) reliée au sommateur (146).

8. Dispositif selon la revendication 7, caractérisé en ce que le système de traitement comporte en outre un système de commande des moyens de sélection (180) de signaux électriques pour sélectionner au moins une zone d'acquisition spectrométrique dans la zone d'observation.

9. Dispositif selon la revendication 8, caractérisé en ce que le système de commande comporte un micro-ordinateur (150).

10. Dispositif selon la revendication 1, caractérisé en ce qu'il comporte deux caméras optiques et deux chambres à sténopé pour fournir une image de localisation stéréoscopique de la zone d'observation (14).

11. Dispositif selon la revendication 1, caractérisée en ce qu'il comporte en outre un télémètre laser pour mesurer les dimensions ou l'éloignement des sources dans la zone d'observation.

12. Dispositif de localisation à distance de sources de rayonnement radioactives dans une zone d'observation (14), comportant au moins une caméra optique (18, 118) apte à fournir des signaux électriques correspondant à une image de la zone d'observation (14), et au moins une chambre à sténopé (10) équipée de moyens de détection du rayonnement émis par les sources radioactives (16) de la zone d'observation (14), caractérisé en ce que les moyens de détection comportent un détecteur (26, 126) de rayonnement gamma à résolution de position, apte à fournir des signaux électriques de détection fonction d'une distribution du rayonnement dans la zone d'observation, et un système de traitement (32, 132) des signaux électriques de la caméra (18, 118) et du détecteur (26, 126) pour former une image de localisation des sources radioactives (16), ledit détecteur comportant un cristal de détection avec une matrice d'éléments de détection (60, 160), dits pixels, disposés dans la chambre à sténopé (10) derrière un collimateur (24).

FIG. 1

EP 0 743 538 A2

FIG. 3

FIG. 2

$$X = \frac{X_A - X_B}{X_A + X_B}$$

$$Y = \frac{Y_A - Y_B}{Y_A + Y_B}$$

$$Z = X_A + X_B$$

EP 0 743 538 A2

FIG. 4